# EUROPEAN PATENT APPLICATION

(11) **EP 2 797 277 A1**
(43) Date of publication of application: **29.10.2014**
(21) Application number: 12859806.7
(22) Date of filing: 20.12.2012
(51) Int. Cl.: H04L 29/06

(54) **THIN TERMINAL MODE-BASED SECURITY INFORMATION EXCHANGE SYSTEM, TERMINAL, SERVER, AND METHOD**

(30) Priority: 23.12.2011 CN 201110437452
(71) Applicant: China Unionpay Co., Ltd, Shanghai 200135 (CN)
(72) Inventor: XU, Jingwen, Shanghai 200135 (CN)
(74) Representative: Seemann & Partner
(86) International application number: PCT/CN2012/087019
(87) International publication number: WO 2013/091553

(57) **Abstract**

The present invention proposes a security information interaction system, terminal, server and method based on the thin terminal mode. Said system comprises an access server which is capable of transferring the application service address associated with the target application service back to said security information interaction terminal based on the security information interaction request from the corresponding security information interaction terminal. The security information interaction system, terminal, server and method based on the thin terminal mode disclosed in the present invention possess the flexible expansibility, can compatibly use multiple servers providing different application services, and have higher work efficiency and higher performance.

## Description

### Related applications

This application is a translation of the international application PCT/CN2012/087019 filed on December 20, 2012, which in turn claims priority from the Chinese application with the official file number 201110437452.2, filed on December 23, 2011. The entire contents of both applications are incorporated herein by reference.

### FIELD OF THE INVENTION

The present invention relates to the security information interaction system, terminal, server and method, and more particularly, to the security information interaction system, terminal, server and method based on the thin terminal mode.

### BACKGROUND

Nowadays, with the increasingly widespread of the network applications and increasingly enrichment of business types of different fields, it becomes more and more important to perform the interaction of the security information (i.e., the information requiring a higher level of security) by means of a security information interaction terminal (especially, a mobile terminal).

In the existing security information interaction systems and methods, the C/S (client / server) mode is usually adopted, that is, each application service provider has the server for implementing said application service, and the security information interaction terminal (such as the mobile terminal) corresponding to each server has a client corresponding to that server, i.e., if a certain security information interaction terminal needs to use the application service provided by a certain server, then it must be installed with a specific client corresponding to that server and directly communicate with the server through the client so as to complete the security information interaction procedure, in other words, different servers have corresponding clients different from each other.

However, the existing security information interaction systems and methods have the following problems: (1) due to the fact that the client must bind with a specific server, the security information interaction terminal having a single client would not use application services provided by a plurality of different application service providers, in addition, if a plurality of clients are installed in the security information interaction terminal, it may lead to a conflict or the difficult compatibility between each other, thereby reducing the expansibility and compatibility of the security information interaction system and method; (2) since different clients corresponding to the same server need to be installed for different types of security information interaction terminals, the existing security information interaction systems and methods have lower terminal compatibility; (3) when the application running in said server needs to be expanded and upgraded, the client corresponding that server needs to be upgraded as well, resulting in the network (especially, the mobile network) load increase, and then decreasing the work efficiency and performance of the security information interaction system and method.

Therefore, there exist the needs for providing a security information interaction system, terminal, server and method, which can compatibly use multiple servers providing different application services, and have higher work efficiency and performance.

### SUMMARY OF THE INVENTION

In order to solve the problems presented in the existing technical solutions described above, the present invention proposes a security information interaction system, terminal, server and method based on the thin terminal mode.

The objects of the present invention are realized through the following technical solutions:

A security information interaction system based on the thin terminal mode, said security information interaction system based on the thin terminal mode comprising:
a security information interaction terminal for receiving a security information interaction request from a user, and transferring said security information interaction request to an access server, and also for establishing a communication link with the application server providing the target application service based on a security information interaction request response transferred back from said access server, and completing the subsequent security information interaction procedure based on said communication link, wherein said security information interaction request including information indicating the target application service;
an access server for querying the address information of the application server providing said target application service based on the received security information interaction request, and sending an application service request constructed according to said security information interaction request to the application server providing said target application service based on the queried address information, and also for constructing said security information interaction request response based on the application service address in the application service request response from said application server providing said target application service, and transferring said security information interaction request response back to said security information interaction terminal; and
at least one application server, each of which is used to construct said application service request response based on said received application service request, transferring said application service request response to said access server, and completing the subsequent security information interaction procedure based on said communication link with said security information interaction terminal established subsequently, wherein, said application service request response including the application service address associated with said target application service.

In the solutions disclosed above, preferably, said security information interaction terminal comprises a user interface module for receiving said security information interaction request from a user and transferring said security information interaction request to said access server, said security information interaction request including the application service parameters and the application service provider parameters selected by the user based on an application service parameter table and an application service provider parameter table.

In the solutions disclosed above, preferably, said user interface module is also used for logining into said access server based on a user instruction, and acquiring said application service parameter table and said application service provider parameter table from said access server.

In the solutions disclosed above, preferably, each record in said application service parameter table is composed of an application service identifier field, an application service name field and an application service description field, wherein said application service name field is used for storing the name of the application service corresponding to the record, said application service identifier field is used for storing the unique application service identifier of the application service, and said application service description field is used for storing the description about the application service.

In the solutions disclosed above, preferably, each record in said application service provider parameter table is composed of an application service provider identifier field and an application service provider name field, wherein said application service provider name field is used for storing the name of the application service provider corresponding to the record, said application service provider identifier field is used for storing the unique application service provider identifier of the application service provider.

In the solutions disclosed above, preferably, based on reading the contents in said application service description field of each record shown in said application service parameter table, user selects the application service corresponding to the record by means of choosing the name of the application service in the name field of one of the records.

In the solutions disclosed above, preferably, user selects the application service provider corresponding to the record by means of choosing the name of the application service provider in the name field of one record in said application service provider parameter table.

In the solutions disclosed above, preferably, said application service parameter is the application service identifier of the application service selected by the user.

In the solutions disclosed above, preferably, said application service provider parameter is the application service provider identifier of the application service provider selected by the user.

In the solutions disclosed above, preferably, said access server further comprises:
a main controller for receiving and analyzing said security information interaction request from said security information interaction terminal 1, constructing a query instruction based on said analyzed application service parameter and said application service provider parameter, and transferring said query instruction to an application service query module, and also for executing the subsequent processing based on the query result transferred back from said application service query module;
the application service query module for querying an application service information table based on said application service parameter and said application service provider parameter in said query instruction, and transferring the query result back to said main controller;
an information table storage module for storing said application service information table;
an parameter table storage module for storing said application service parameter table and said application service provider parameter table, and updating said application service parameter table and said application service provider parameter table based on the received parameter table configuration instruction; and
a configuration module for receiving an information table configuration instruction and/or the parameter table configuration instruction from the user, and updating said application service information table, and/or said application service parameter table, and/or said application service provider parameter table based on said information table configuration instructions, and/or said parameter table configuration instruction.

In the solutions disclosed above, preferably, said parameter table storage module is also used for controlling the display attributes of each record in said application service parameter table and said application service provider parameter table based on the received parameter table configuration instruction.

In the solutions disclosed above, preferably, said main controller is also used for providing said application service parameter table and said application service provider parameter table to said user interface module based on said login of said user interface module.

In the solutions disclosed above, preferably, each record in said application service information table is composed of the application service identifier field, the application service provider identifier field and an application server address information field, wherein said application service identifier field is used for storing the unique application service identifier of the application service corresponding to the record, said application service provider identifier field is used for storing the unique application service provider identifier of the application service provider providing the application service, and said application server address information field is used for storing the address information of the application server providing the application service.

In the solutions disclosed above, preferably, the same application service has the same application service identifier both in said application service parameter table and said application service information table, and the same application service provider has the same application service provider identifier both in said application service provider parameter table and said application service information table, and the application service identifier of any record in said application service information table has to exist in said application service parameter table, whereas the application service provider identifier of any record in said application service information table has to exist in said application service provider parameter table.

In the solutions disclosed above, preferably, when the record matching with both said application service parameter and said application service provider parameter is found out from said application service information table, the query result returned back to said main controller by said application service query module indicates "matching operation is successful", and said query result includes said address information of the application server in said matched record.

In the solutions disclosed above, preferably, when the record matching with both said application service parameter and said application service provider parameter is found out from said application service information table, the query result returned back to said main controller by said application service query module indicates "matching operation is successful", and said query result includes said address information of the application server in said matched record.

In the solutions disclosed above, preferably, when only the record which matches with said application service parameter but does not match with said application service provider parameter is found out from said application service information table, the query result returned back to said main controller by said application service query module indicates "matching operation is not successful", and said query result includes the application service provider identifier in said record which matches with said application service parameter but does not match with said application service provider parameter.

In the solutions disclosed above, preferably, said main controller is further used for sending the application service request constructed according to said security information interaction request to the application server directed by said address information of the application server in said matched record when said received query result indicates "matching operation is successful".

In the solutions disclosed above, preferably, said main controller is further used for constructing said security information interaction request response based on the application service address in the application service request response from the application server directed by said address information, and transferring said security information interaction request response back to said user interface module, wherein said security information interaction request response including said application service address and a flag indicating "bridging".

In the solutions disclosed above, preferably, said main controller is further used for constructing said security information interaction request response based on said query result when said received query result indicates "matching operation is not successful", and transferring said security information interaction request response back to said user interface module, wherein said security information interaction request response including said application service provider identifier in the record which matches with said application service parameter but does not match with said application service provider parameter.

In the solutions disclosed above, preferably, said user interface module is also used for receiving and analyzing said security information interaction request response, establishing the communication link with the application server providing said target application service based on said application service address included in said security information interaction request response when said security information interaction request response includes said flag indicating "bridging", and completing the subsequent security information interaction procedure based on said communication link.

In the solutions disclosed above, preferably, said user interface module is also used for displaying the name of the application service provider corresponding to said application service provider identifier based on said application service provider identifier included in said security information interaction request response when said received security information interaction request response does not include said flag indicating "bridging", and asking the user whether to select other application service providers and then restarting or ending the security information interaction procedure based on the selection of the user.

In the solutions disclosed above, preferably, said configuration module is also used for transferring the parameter table configuration instruction from the user to said parameter table storage module.

In the solutions disclosed above, preferably, said security information interaction terminal is a mobile terminal.

In the solutions disclosed above, preferably, said user interface module is a web browser.

In the solutions disclosed above, preferably, both said address information of the application server and said application service address both are address of web sites.

In the solutions disclosed above, preferably, said security information interaction procedure is a mobile payment procedure.

In the solutions disclosed above, preferably, an SSL encryption transmission channel is established between said security information interaction terminal and said access server, and the information interaction between said security information interaction terminal and said access server is performed using said SSL encryption transmission channel.

In the solutions disclosed above, preferably, a bidirectional authentication mechanism in PKI certificate authentication system is employed between said security information interaction terminal and said access server.

In the solutions disclosed above, preferably, each of said at least one application server further comprises:
a request processing module for constructing said application service request response based on said received application service request, and transferring said application service request response to said access server, wherein said application service request response including the application service address associated with said target application service; and
an application service executing module for completing the subsequent security information interaction procedure based on said communication link with said security information interaction terminal established subsequently.

The objects of the present invention can also be realized through the following technical solutions:

A security information interaction terminal, said security information interaction terminal is used for receiving a security information interaction request from a user, and transferring said security information interaction request to the corresponding access server, and also for establishing a communication link with the application server providing the target application service based on the security information interaction request response transferred back from said access server, and completing the subsequent security information interaction procedure based on said communication link, wherein said security information interaction request including the information indicating the target application service.

The objects of the present invention can also be realized through the following technical solutions:

An access server, said access server being used for querying the address information of the application server providing the target application service based on the security information interaction request received from the corresponding security information interaction terminal, and sending an application service request constructed according to said security information interaction request to the application server providing said target application service based on the queried address information, and also for constructing a security information interaction request response based on the application service address in the application service request response from said application server providing said target application service, and transferring said security information interaction request response back to said security information interaction terminal.

The objects of the present invention can also be realized through the following technical solutions:

An application server, said application server being used for constructing an application service request response based on the application service request received from an access server, transferring said application service request response to said access server, and completing the subsequent security information interaction procedure based on the communication link with the corresponding security information interaction terminal established subsequently, wherein said application service request response including the application service address associated with a target application service.

The objects of the present invention can also be realized through the following technical solutions:
A security information interaction method based on the thin terminal mode, said security information interaction method based on the thin terminal mode comprising the following steps:
(A1) a security information interaction terminal receiving a security information interaction request from a user, and transferring said security information interaction request to an access server, wherein said security information interaction request including the information indicating a target application service;
(A2) said access server querying the address information of the application server providing said target application service based on said received security information interaction request, and sending an application service request constructed according to said security information interaction request to the application server providing said target application service based on the queried address information;
(A3) said application server providing said target application service constructing an application service request response based on the received application service request, and transferring said application service request response to said access server, wherein said application service request response including the application service address associated with said target application service;
(A4) said access server constructing a security information interaction request response based on the application service address in the application service request response from said application server providing said target application service, and transferring said security information interaction request response back to said security information interaction terminal; and
(A5) said security information interaction terminal establishing a communication link with said application server providing said target application service based on said security information interaction request response transferred back from said access server, and completing the subsequent security information interaction procedure based on said communication link.

The security information interaction system, terminal, server and method based on the thin terminal mode disclosed in the present invention have the following advantages: they possess the flexible expansibility; they can compatibly use multiple servers providing different application services, and have higher work efficiency and higher performance; due to the fact that said security information interaction terminal is substantially in the form of thin terminal, the function and number of the application server can be expanded easily with the needs of the actual requirements.

### BRIEF DESCRIPTION OF THE DRAWINGS

The technical features and advantages of the present invention will be better appreciated by one skilled in the art in conjunction with the accompanying drawings, in which:
FIG. 1 is an architecture diagram of the security information interaction system based on the thin terminal mode according to the embodiment of the present invention; and
FIG. 2 is a flow diagram of the security information interaction method based on the thin terminal mode according to the embodiment of the present invention.

### DETAILED DESCRIPTION OF THE INVENTION

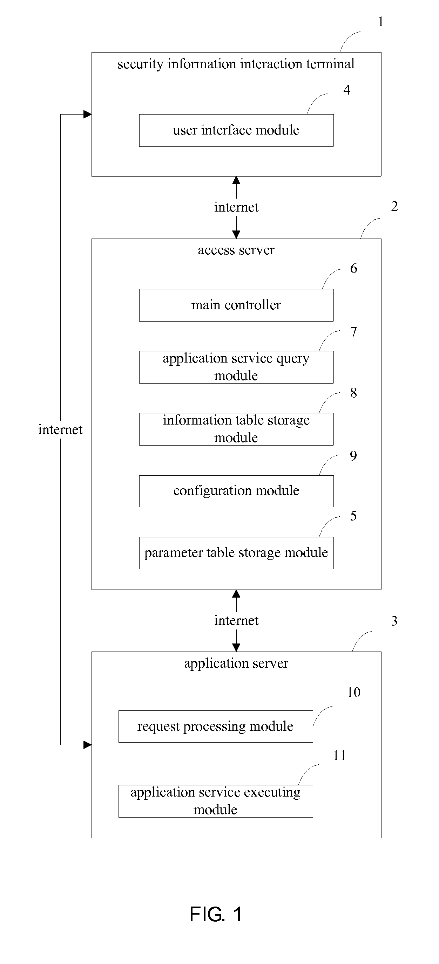

FIG. 1 is an architecture diagram of the security information interaction system based on the thin terminal mode according to the embodiment of the present invention. As shown in FIG. 1, the security information interaction system based on the thin terminal mode disclosed in the present invention comprises a security information interaction terminal 1, an access server 2 and at least one application server 3 (e.g. a mobile banking server). Said security information interaction terminal 1 is used for receiving the security information interaction request from a user, and transferring said security information interaction request to said access server 2, and is also used for establishing a communication link with the application server providing the target application service based on the security information interaction request response transferred back from said access server 2, and completing the subsequent security information interaction procedure based on said communication link, wherein said security information interaction request including the information indicating the target application service. Said access server 2 is used for querying the address information of the application server providing said target application service based on the received security information interaction request, and sending the application service request constructed according to said security information interaction request to the application server providing said target application service based on the queried address information, and is also used for constructing said security information interaction request response based on the application service address in the application service request response from said application server providing said target application service, and transferring said security information interaction request response back to said security information interaction terminal 1. Each of said at least one application server 3 is used for constructing said application service request response based on the received application service request, transferring said application service request response to said access server 2, and completing the subsequent security information interaction procedure based on said communication link with said security information interaction terminal 1 established subsequently, wherein said application service request response including the application service address associated with said target application service.

Preferably, in the security information interaction system based on the thin terminal mode disclosed in the present invention, said security information interaction terminal 1 comprises a user interface module 4. Said user interface module 4 is used for receiving said security information interaction request from the user and transferring said security information interaction request to said access server 2, said security information interaction request including the application service parameters and the application service provider parameters selected by the user based on an application service parameter table and an application service provider parameter table.

Preferably, in the security information interaction system based on the thin terminal mode disclosed in the present invention, said user interface module 4 is also used for logining into said access server 2 based on a user instruction (e.g. the instruction for logining into the web sites of said access server 2), and for acquiring said application service parameter table and said application service provider parameter table from said access server 2.

Preferably, in the security information interaction system based on the thin terminal mode disclosed in the present invention, each record in said application service parameter table is composed of an application service identifier field, an application service name field and an application service description field, wherein said application service name field is used for storing the name of the application service corresponding to the record, said application service identifier field is used for storing the unique application service identifier of the application service, and said application service description field is used for storing the description about the application service (this description is used for explaining the specific content of the application service to the user).

Preferably, in the security information interaction system based on the thin terminal mode disclosed in the present invention, each record in said application service provider parameter table is composed of an application service provider identifier field and an application service provider name field, wherein said application service provider name field is used for storing the name of the application service provider corresponding to the record, said application service provider identifier field is used for storing the unique application service provider identifier of the application service provider.

Preferably, in the security information interaction system based on the thin terminal mode disclosed in the present invention, based on reading the contents in said application service description field of each record shown in said application service parameter table, user selects the application service corresponding to the record (i.e., the user-expected application service) by means of choosing the name of the application service in the name field of one of the records.

Preferably, in the security information interaction system based on the thin terminal mode disclosed in the present invention, user selects the application service provider corresponding to the record (i.e., the user-expected application service provider) by means of choosing the name of the application service provider in the name field of one record in said application service provider parameter table.

Preferably, in the security information interaction system based on the thin terminal mode disclosed in the present invention, said application service parameter is the application service identifier (i.e., the ID of the application service) of the application service selected by the user.

Preferably, in the security information interaction system based on the thin terminal mode disclosed in the present invention, said application service provider parameter is the application service provider identifier (i.e., the ID of the application service provider) of the application service provider selected by the user.

Preferably, in the security information interaction system based on the thin terminal mode disclosed in the present invention, said access server 2 further comprises a main controller 6, an application service query module 7, an information table storage module 8, a configuration module 9 and a parameter table storage module 5. Said main controller 6 is used for receiving and analyzing said security information interaction request from said security information interaction terminal 1, and constructing a query instruction based on the analyzed application service parameter (i.e., the ID of the application service selected by the user) and application service provider parameter (i.e., the ID of the application service provider selected by the user), and transferring said query instruction to said application service query module 7, and also for executing the subsequent processing based on the query result transferred back from said application service query module 7. Said application service query module 7 is used for querying an application service information table based on said application service parameter and said application service provider parameter in said query instruction, and transferring the query result back to said main controller 6. Said information table storage module 8 is used for storing said application service information table. Said parameter table storage module 5 is used for storing said application service parameter table and said application service provider parameter table, and updating said application service parameter table and said application service provider parameter table based on the received parameter table configuration instruction. Said configuration module 9 is used for receiving an information table configuration instruction and/or the parameter table configuration instruction from the user, and updating said application service information table, and/or said application service parameter table, and/or said application service provider parameter table based on said information table configuration instructions, and/or said parameter table configuration instruction.

Preferably, in the security information interaction system based on the thin terminal mode disclosed in the present invention, said parameter table storage module 5 is also used for controlling the display attributes of each record in said application service parameter table and said application service provider parameter table (i.e., controlling which records will be displayed for the user to select) based on the received parameter table configuration instruction.

Preferably, in the security information interaction system based on the thin terminal mode disclosed in the present invention, said main controller 6 is also used for providing said application service parameter table and said application service provider parameter table to said user interface module 4 based on said login of said user interface module 4.

Preferably, in the security information interaction system based on the thin terminal mode disclosed in the present invention, each record in said application service information table is composed of the application service identifier field, the application service provider identifier field and an application server address information field, wherein said application service identifier field is used for storing the unique application service identifier of the application service corresponding to the record, said application service provider identifier field is used for storing the unique application service provider identifier of the application service provider providing the application service, and said application server address information field is used for storing the address information of the application server providing the application service.

Preferably, in the security information interaction system based on the thin terminal mode disclosed in the present invention, the same application service has the same application service identifier both in said application service parameter table and said application service information table, and the same application service provider has the same application service provider identifier both in said application service provider parameter table and said application service information table, and the application service identifier of any record in said application service information table has to exist in said application service parameter table, whereas the application service provider identifier of any record in said application service information table has to exist in said application service provider parameter table.

Preferably, in the security information interaction system based on the thin terminal mode disclosed in the present invention, when the record matching with both said application service parameter and said application service provider parameter is found out from said application service information table, the query result returned back to said main controller 6 by said application service query module 7 indicates "matching operation is successful", and said query result includes the address information of the application server in the matched record.

Preferably, in the security information interaction system based on the thin terminal mode disclosed in the present invention, when the record matching with both said application service parameter and said application service provider parameter is found out from said application service information table, the query result returned back to said main controller 6 by said application service query module 7 indicates "matching operation is successful", and said query result includes the address information of the application server in said matched record.

Preferably, in the security information interaction system based on the thin terminal mode disclosed in the present invention, when only the record which matches with said application service parameter but does not match with said application service provider parameter is found out from said application service information table, the query result returned back to said main controller 6 by said application service query module 7 indicates "matching operation is not successful", and said query result includes said application service provider identifier in said record which matches with said application service parameter but does not match with said application service provider parameter.

Preferably, in the security information interaction system based on the thin terminal mode disclosed in the present invention, said main controller 6 is further used for sending the application service request constructed according to said security information interaction request to the application server (i.e., the application server providing said target application service) directed by the address information of the application server in the matched record when the received query result indicates "matching operation is successful".

Preferably, in the security information interaction system based on the thin terminal mode disclosed in the present invention, said main controller 6 is further used for constructing said security information interaction request response based on the application service address in the application service request response from the application server directed by said address information, and transferring said security information interaction request response back to said user interface module 4, whereinsaid security information interaction request response including said application service address (i.e., the address capable of providing the target application service) and a flag indicating "bridging".

Preferably, in the security information interaction system based on the thin terminal mode disclosed in the present invention, said main controller 6 is further used for constructing said security information interaction request response based on said query result when the received query result indicates "matching operation is not successful", and transferring said security information interaction request response back to said user interface module 4, wherein said security information interaction request response including the application service provider identifier in the record which matches with said application service parameter but does not match with said application service provider parameter.

Preferably, in the security information interaction system based on the thin terminal mode disclosed in the present invention, said user interface module 4 is also used for receiving and analyzing said security information interaction request response, establishing the communication link with the application server providing said target application service based on the application service address included in said security information interaction request response when said security information interaction request response includes the flag indicating "bridging", and completing the subsequent security information interaction procedure based on said communication link.

Preferably, in the security information interaction system based on the thin terminal mode disclosed in the present invention, said user interface module 4 is also used for displaying the name of the application service provider corresponding to said application service provider identifier based on the application service provider identifier included in said security information interaction request response when the received security information interaction request response does not include the flag indicating "bridging", and asking the user whether to select other application service providers and then restarting or ending the security information interaction procedure based on the selection of the user.

Preferably, in the security information interaction system based on the thin terminal mode disclosed in the present invention, said configuration module 9 is also used for transferring the parameter table configuration instruction from the user to said parameter table storage module 5.

Alternatively, in the security information interaction system based on the thin terminal mode disclosed in the present invention, said configuration module 9 is also used for transferring said parameter table configuration instruction to said parameter table storage module 5 periodically based on configuration files.

Preferably, in the security information interaction system based on the thin terminal mode disclosed in the present invention, said security information interaction terminal 1 is a mobile terminal.

Preferably, in the security information interaction system based on the thin terminal mode disclosed in the present invention, said user interface module 4 is a web browser.

Preferably, in the security information interaction system based on the thin terminal mode disclosed in the present invention, both the address information of the application server and said application service address are the address of web sites (i.e., the address of the web page).

Preferably, in the security information interaction system based on the thin terminal mode disclosed in the present invention, said security information interaction procedure is a mobile payment procedure.

Preferably, in the security information interaction system based on the thin terminal mode disclosed in the present invention, an SSL encryption transmission channel is established between said security information interaction terminal 1 and said access server 2, and the information interaction between said security information interaction terminal 1 and said access server 2 is performed using said SSL encryption transmission channel.

Preferably, in the security information interaction system based on the thin terminal mode disclosed in the present invention, a bidirectional authentication mechanism in PKI certificate authentication system is employed between said security information interaction terminal 1 and said access server 2.

Preferably, in the security information interaction system based on the thin terminal mode disclosed in the present invention, each of said at least one application server 3 further comprises a request processing module 10 and an application service executing module 11. Said request processing module 10 is used for constructing said application service request response based on the received application service request, and transferring said application service request response to said access server 2, wherein said application service request response including the application service address associated with said target application service. Said application service executing module 11 is used for completing the subsequent security information interaction procedure based on said communication link with said security information interaction terminal 1 established subsequently (i.e., realizing the target application service).

As can be seen from above, in the security information interaction system based on the thin terminal mode disclosed in the present invention, the security information interaction terminal is substantially in the form of thin terminal, that is, the procedure of determining the address of the application server which may provide the target application service is arranged to be completed in the access server (i.e., said application service information table, said application service parameter table and said application service provider parameter table are only stored and configured in said access server), so that the function and number of the application server can be expanded easily with the needs of the actual requirements.

As shown in FIG. 1, the present invention also discloses a security information interaction terminal which is used for receiving a security information interaction request from a user, and transferring said security information interaction request to the corresponding access server, and also for establishing a communication link with the application server providing the target application service based on the security information interaction request response transferred back from said access server, and completing the subsequent security information interaction procedure based on said communication link, wherein said security information interaction request including the information indicating the target application service.

Preferably, in the security information interaction terminal disclosed in the present invention, said security information interaction terminal comprises a user interface module. Said user interface module is used for receiving said security information interaction request from a user and transferring said security information interaction request to said access server, said security information interaction request including the application service parameter and the application service provider parameter selected by the user based on an application service parameter table and an application service provider parameter table.

Preferably, in the security information interaction terminal disclosed in the present invention, said user interface module is also used for logining into said access server based on a user instruction (e.g. the instruction for logining into the web sites of said access server), and for acquiring said application service parameter table and said application service provider parameter table from said access server.

Preferably, in the security information interaction terminal disclosed in the present invention, each record in said application service parameter table is composed of an application service identifier field, an application service name field and an application service description field, wherein said application service name field is used for storing the name of the application service corresponding to the record, said application service identifier field is used for storing the unique application service identifier of the application service, and said application service description field is used for storing the description about the application service (this description is used for explaining the specific content of the application service to the user).

Preferably, in the security information interaction terminal disclosed in the present invention, each record in said application service provider parameter table is composed of an application service provider identifier field and an application service provider name field, wherein said application service provider name field is used for storing the name of the application service provider corresponding to the record, said application service provider identifier field is used for storing the unique application service provider identifier of the application service provider.

Preferably, in the security information interaction terminal disclosed in the present invention, based on reading the contents in said application service description field of each record shown in said application service parameter table, user selects the application service corresponding to the record (i.e., the user-expected application service) by means of choosing the name of the application service in the name field of one of the records.

Preferably, in the security information interaction terminal disclosed in the present invention, user selects the application service provider corresponding to the record (i.e., the user-expected application service provider) by means of choosing the name of the application service provider in the name field of one record in said application service provider parameter table.

Preferably, in the security information interaction terminal disclosed in the present invention, said application service parameter is the application service identifier (i.e., the ID of the application service) of the application service selected by the user.

Preferably, in the security information interaction terminal disclosed in the present invention, said application service provider parameter is the application service provider identifier (i.e., the ID of the application service provider) of the application service provider selected by the user.

Preferably, in the security information interaction terminal disclosed in the present invention, said user interface module is also used for receiving and analyzing said security information interaction request response, establishing the communication link with the application server providing said target application service based on the application service address included in said security information interaction request response when said security information interaction request response includes the flag indicating "bridging", and completing the subsequent security information interaction procedure based on said communication link.

Preferably, in the security information interaction terminal disclosed in the present invention, said user interface module is also used for displaying the name of the application service provider corresponding to said application service provider identifier based on the application service provider identifier included in said security information interaction request response when the received security information interaction request response does not include the flag indicating "bridging", and asking the user whether to select other application service providers and then restarting or ending the security information interaction procedure based on the selection of the user.

Preferably, said security information interaction terminal disclosed in the present invention is a mobile terminal.

Preferably, in the security information interaction terminal disclosed in the present invention, said user interface module is a web browser.

Preferably, in the security information interaction terminal disclosed in the present invention, said application service address is a web site (i.e., the address of the web page).

As can be seen from above, the security information interaction terminal disclosed in the present invention is substantially in the form of thin terminal, that is, the procedure of determining the address of the application server which may provide the target application service is arranged to be completed in the access server (i.e., said application service information table, said application service parameter table and said application service provider parameter table are only stored and configured in said access server), so that the function and number of the application server can be expanded easily with the needs of the actual requirements.

As shown in FIG. 1, the present invention also discloses an access server which is used for querying the address information of the application server providing the target application service based on the security information interaction request received from the corresponding security information interaction terminal, and sending an application service request constructed according to said security information interaction request to the application server providing said target application service based on the queried address information, and also for constructing a security information interaction request response based on the application service address in the application service request response from said application server providing said target application service, and transferring said security information interaction request response back to said security information interaction terminal.

Preferably, the access server disclosed in the present invention further comprises a main controller, an application service query module, an information table storage module, a configuration module and an parameter table storage module. Said main controller is used for receiving and analyzing said security information interaction request from said security information interaction terminal, and constructing a query instruction based on the analyzed application service parameter (i.e., the ID of the application service selected by the user) and the application service provider parameter (i.e., the ID of the application service provider selected by the user), and transferring said query instruction to said application service query module, and also for executing the subsequent procedure based on the query result transferred back from said application service query module. Said application service query module is used for querying an application service information table based on said application service parameter and said application service provider parameter in said query instruction, and transferring the query result back to said main controller. Said information table storage module is used for storing said application service information table. Said parameter table storage module is used for storing said application service parameter table and said application service provider parameter table, and updating said application service parameter table and said application service provider parameter table based on the received parameter table configuration instruction. Said configuration module is used for receiving an information table configuration instruction and/or the parameter table configuration instruction from the user, and updating said application service information table, and/or said application service parameter table, and/or said application service provider parameter table based on said information table configuration instructions, and/or said parameter table configuration instruction.

Preferably, in the security information interaction system based on the thin terminal mode disclosed in the present invention, said parameter table storage module is also used for controlling the display attributes of each record in said application service parameter table and said application service provider parameter table (i.e., controlling which records will be displayed for the user to select) based on the received parameter table configuration instruction.

Preferably, in the security information interaction system based on the thin terminal mode disclosed in the present invention, said main controller is also used for providing said application service parameter table and said application service provider parameter table to said user interface module based on said login of said user interface module.

Preferably, in the access server disclosed in the present invention, each record in said application service information table is composed of the application service identifier field, the application service provider identifier field and an application server address information field, wherein said application service identifier field is used for storing the unique application service identifier of the application service corresponding to the record, said application service provider identifier field is used for storing the unique application service provider identifier of the application service provider providing the application service, and said application server address information field is used for storing the address information of the application server providing the application service.

Preferably, in the access server disclosed in the present invention, when the record matching with both said application service parameter and said application service provider parameter is found out from said application service information table, the query result returned back to said main controller by said application service query module indicates "matching operation is successful", and said query result includes the address information of the application server in the matched record.

Preferably, in the access server disclosed in the present invention, when the record matching with both said application service parameter and said application service provider parameter is found out from said application service information table, the query result returned back to said main controller by said application service query module indicates "matching operation is successful", and said query result includes the address information of the application server in the matched record.

Preferably, in the access server disclosed in the present invention, when only the record which matches with said application service parameter but does not match with said application service provider parameter is found out from said application service information table, the query result returned back to said main controller by said application service query module indicates "matching operation is not successful", and said query result includes the application service provider identifier in the record which matches with said application service parameter but does not match with said application service provider parameter.

Preferably, in the access server disclosed in the present invention, said main controller is further used for sending the application service request constructed according to said security information interaction request to the application server (i.e., the application server providing said target application service) directed by the address information of the application server in the matched record when the received query result indicates "matching operation is successful".

Preferably, in the access server disclosed in the present invention, said main controller is further used for constructing said security information interaction request response based on the application service address in the application service request response from the application server directed by said address information, and transferring said security information interaction request response back to said corresponding security information interaction terminal, wherein said security information interaction request response including said application service address (i.e., the address capable of providing the target application service) and the flag indicating "bridging".

Preferably, in the access server disclosed in the present invention, said main controller is further used for constructing said security information interaction request response based on said query result when the received query result indicates "matching operation is not successful", and transferring said security information interaction request response back to said corresponding security information interaction terminal, wherein said security information interaction request response including the application service provider identifier in the record which matches with said application service parameter but does not match with said application service provider parameter.

As shown in FIG. 1, the present invention also discloses an application server which is used for constructing an application service request response based on the application service request received from an access server, transferring said application service request response to said access server, and completing the subsequent security information interaction procedure based on a communication link with the corresponding security information interaction terminal established subsequently, wherein said application service request response including the application service address associated with a target application service.

Preferably, the application server disclosed in the present invention further comprises a request processing module and an application service executing module. Said request processing module is used for constructing said application service request response based on the received application service request, and transferring said application service request response to said access server, wherein said application service request response including the application service address associated with said target application service. Said application service executing module is used for completing the subsequent security information interaction procedure based on said communication link with said security information interaction terminal established subsequently (i.e., realizing the target application service).

Preferably, in the application server disclosed in the present invention, said application service address is a web site (i.e., the address of the web page).

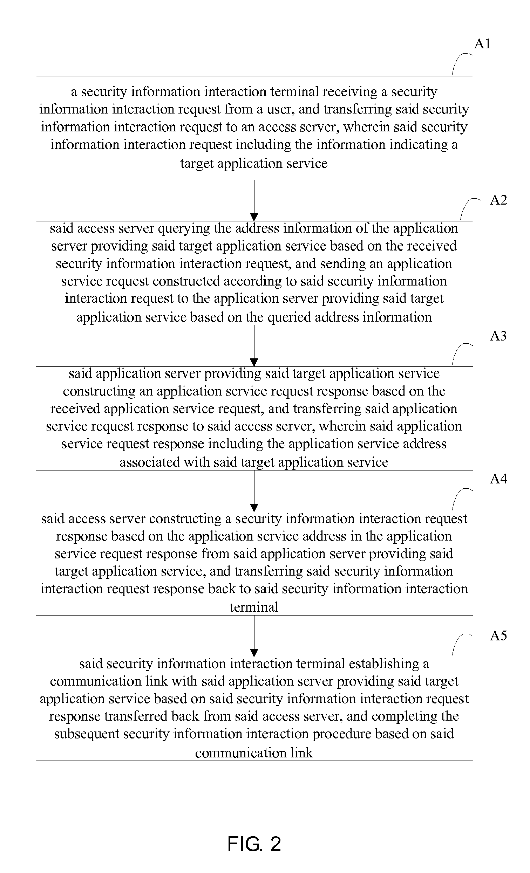

FIG. 2 is the flow diagram of the security information interaction method based on the thin terminal mode according to the embodiment of the present invention. As shown in FIG. 2, the security information interaction method based on the thin terminal mode disclosed in the present invention comprises the following steps: (A1) a security information interaction terminal receiving a security information interaction request from a user, and transferring said security information interaction request to an access server, wherein said security information interaction request including the information indicating a target application service; (A2) said access server querying the address information of the application server providing said target application service based on the received security information interaction request, and sending an application service request constructed according to said security information interaction request to the application server providing said target application service based on the queried address information; (A3) said application server providing said target application service constructing an application service request response based on the received application service request, and transferring said application service request response to said access server, wherein said application service request response including the application service address associated with said target application service; (A4) said access server constructing a security information interaction request response based on the application service address in the application service request response from said application server providing said target application service, and transferring said security information interaction request response back to said security information interaction terminal; and (A5) said security information interaction terminal establishing a communication link with said application server providing said target application service based on said security information interaction request response transferred back from said access server, and completing the subsequent security information interaction procedure based on said communication link.

Preferably, in the security information interaction method based on the thin terminal mode disclosed in the present invention, said step (A1) further comprises: receiving said security information interaction request from a user and transferring said security information interaction request to said access server, wherein said security information interaction request including an application service parameter and an application service provider parameter selected by the user based on an application service parameter table and an application service provider parameter table.

Preferably, in the security information interaction method based on the thin terminal mode disclosed in the present invention, said step (A1) further comprises: said security information interaction terminal logining into said access server based on a user instruction (e.g. the instruction for logining into the web sites of said access server 2), and acquiring said application service parameter table and said application service provider parameter table from said access server.

Preferably, in the security information interaction method based on the thin terminal mode disclosed in the present invention, each record in said application service parameter table is composed of an application service identifier field, an application service name field and an application service description field, wherein said application service name field is used for storing the name of the application service corresponding to the record, said application service identifier field is used for storing the unique application service identifier of the application service, and said application service description field is used for storing the description about the application service (this description is used for explaining the specific content of the application service to the user).

Preferably, in the security information interaction method based on the thin terminal mode disclosed in the present invention, each record in said application service provider parameter table is composed of an application service provider identifier field and an application service provider name field, wherein said application service provider name field is used for storing the name of the application service provider corresponding to the record, and said application service provider identifier field is used for storing the unique application service provider identifier of the application service provider. Preferably, in the security information interaction method based on the thin terminal mode disclosed in the present invention, based on reading the contents in said application service description field of each record shown in said application service parameter table, user selects the application service corresponding to the record (i.e., the user-expected application service) by means of choosing the name of the application service in the name field of one of the records.

Preferably, in the security information interaction method based on the thin terminal mode disclosed in the present invention, user selects the application service provider corresponding to the record (i.e., the user-expected application service provider) by means of choosing the name of the application service provider in the name field of one record in said application service provider parameter table.

Preferably, in the security information interaction method based on the thin terminal mode disclosed in the present invention, said application service parameter is the application service identifier (i.e., the ID of the application service) of the application service selected by the user.

Preferably, in the security information interaction method based on the thin terminal mode disclosed in the present invention, said application service provider parameter is the application service provider identifier (i.e., the ID of the application service provider) of the application service provider selected by the user.

Preferably, in the security information interaction method based on the thin terminal mode disclosed in the present invention, said access server controls the display attributes of each record in said application service parameter table and said application service provider parameter table (i.e., controlling which records will be displayed for the user to select) based on the received parameter table configuration instruction.

Preferably, in the security information interaction method based on the thin terminal mode disclosed in the present invention, said access server updates said application service parameter table and said application service provider parameter table based on the received parameter table configuration instruction.

Preferably, in the security information interaction method based on the thin terminal mode disclosed in the present invention, said step (A1) further comprises: said access server providing said application service parameter table and said application service provider parameter table to said security information interaction terminal based on said login of said security information interaction terminal.

Preferably, in the security information interaction method based on the thin terminal mode disclosed in the present invention, said step (A2) further comprises: said access server receiving and analyzing said security information interaction request from said security information interaction terminal, querying the application service information table based on the analyzed application service parameter (i.e., the ID of the application service selected by the user) and the application service provider parameter (i.e., the ID of the application service provider selected by the user), and executing the subsequent processing based on the query result.

Preferably, in the security information interaction method based on the thin terminal mode disclosed in the present invention, each record in said application service information table is composed of the application service identifier field, the application service provider identifier field and an application server address information field, wherein said application service identifier field is used for storing the unique application service identifier of the application service corresponding to the record, said application service provider identifier field is used for storing the unique application service provider identifier of the application service provider providing the application service, and said application server address information field is used for storing the address information of the application server providing the application service.

Preferably, in the security information interaction method based on the thin terminal mode disclosed in the present invention, the same application service has the same application service identifier both in said application service parameter table and said application service information table, and the same application service provider has the same application service provider identifier both in said application service provider parameter table and said application service information table, and the application service identifier of any record in said application service information table has to exist in said application service parameter table, whereas the application service provider identifier of any record in said application service information table has to exist in said application service provider parameter table.

Preferably, in the security information interaction method based on the thin terminal mode disclosed in the present invention, said step (A2) further comprises: when the record matching with both said application service parameter and said application service provider parameter is found out from said application service information table, said access server sending the application service request constructed according to said security information interaction request to the application server (i.e., the application server providing said target application service) directed by said address information of the application server in the matched record.

Preferably, in the security information interaction method based on the thin terminal mode disclosed in the present invention, said step (A2) further comprises: when only the record which matches with said application service parameter but does not match with said application service provider parameter is found out from said application service information table, said access server constructing said security information interaction request response based on said query result, and transferring said security information interaction request response back to said security information interaction terminal, wherein said security information interaction request response including the application service provider identifier in the record which matches with said application service parameter but does not match with said application service provider parameter.

Preferably, in the security information interaction method based on the thin terminal mode disclosed in the present invention, said step (A4) further comprises: constructing said security information interaction request response based on the application service address in the application service request response from the application server directed by said address information, and transferring said security information interaction request response back to said security information interaction terminal, wherein said security information interaction request response including said application service address (i.e., the address which is capable of providing the target application service) and a flag indicating "bridging".

Preferably, in the security information interaction method based on the thin terminal mode disclosed in the present invention, said access server receives the information table configuration instruction from the user, and updates said application service information table based on said information table configuration instruction.

Preferably, in the security information interaction method based on the thin terminal mode disclosed in the present invention, said access server receives the parameter table configuration instruction from the user, and updates said application service parameter table and said application service provider parameter table based on said parameter table configuration instruction.

Preferably, in the security information interaction method based on the thin terminal mode disclosed in the present invention, said step (A5) further comprises: receiving and analyzing said security information interaction request response, establishing the communication link with the application server providing said target application service based on said application service address included in said security information interaction request response when said security information interaction request response includes the flag indicating "bridging", and completing the subsequent security information interaction procedure based on said communication link.

Preferably, in the security information interaction method based on the thin terminal mode disclosed in the present invention, said step (A5) further comprises: displaying the name of the application service provider corresponding to said application service provider identifier based on the application service provider identifier included in said security information interaction request response when the received security information interaction request response does not include the flag indicating "bridging", and asking the user whether to select other application service providers and then restarting or ending the security information interaction procedure based on the selection of the user.

Preferably, in the security information interaction method based on the thin terminal mode disclosed in the present invention, said security information interaction terminal is a mobile terminal.

Preferably, in the security information interaction method based on the thin terminal mode disclosed in the present invention, said security information interaction terminal includes a web browser.

Preferably, in the security information interaction method based on the thin terminal mode disclosed in the present invention, both said address information of the application server and said application service address are the address of web sites (i.e., the address of the web page).

Preferably, in the security information interaction method based on the thin terminal mode disclosed in the present invention, said security information interaction procedure is a mobile payment procedure.

Preferably, in the security information interaction method based on the thin terminal mode disclosed in the present invention, an SSL encryption transmission channel is established between said security information interaction terminal and said access server, and the information interaction between said security information interaction terminal and said access server is performed using said SSL encryption transmission channel.

Preferably, in the security information interaction method based on the thin terminal mode disclosed in the present invention, a bidirectional authentication mechanism in the PKI certificate authentication system is employed between said security information interaction terminal and said access server.

As can be seen from the above, in the security information interaction method based on the thin terminal mode disclosed in the present invention, the security information interaction terminal is substantially in the form of thin terminal, that is, the procedure of determining the address of the application server which may provide the target application service is arranged to be completed in the access server (i.e., said application service information table, said application service parameter table and said application service provider parameter table are only stored and configured in said access server), so that the function and number of the application server can be expanded easily with the needs of the actual requirements.

Although the present invention is described by way of the preferred embodiments mentioned above, but its realization form is not limited to aforementioned embodiments. It should be recognized that various changes and modifications can be made to the present invention by one skilled in the art without departing from the spirit and scope of the invention.

## Claims

1. A security information interaction system based on the thin terminal mode, said security information interaction system based on the thin terminal mode comprising:
a security information interaction terminal for receiving a security information interaction request from a user, and transferring said security information interaction request to an access server, and also for establishing a communication link with the application server providing the target application service based on a security information interaction request response transferred back from said access server, and completing the subsequent security information interaction procedure based on said communication link, wherein said security information interaction request including the information indicating the target application service;
an access server for querying the address information of the application server providing said target application service based on the received security information interaction request, and sending an application service request constructed according to said security information interaction request to the application server providing said target application service based on the queried address information, and also for constructing said security information interaction request response based on the application service address in the application service request response from said application server providing said target application service, and transferring said security information interaction request response back to said security information interaction terminal; and
at least one application server, each of which for constructing said application service request response based on the received application service request, transferring said application service request response to said access server, and completing the subsequent security information interaction procedure based on the communication link with said security information interaction terminal established subsequently, wherein said application service request response including the application service address associated with said target application service.

2. The security information interaction system based on the thin terminal mode as claimed in claim 1, **characterized in that**, said security information interaction terminal comprises a user interface module for receiving the security information interaction request from the user and transferring said security information interaction request to said access server, said security information interaction request including the application service parameters and the application service provider parameters selected by the user based on an application service parameter table and an application service provider parameter table.

3. The security information interaction system based on the thin terminal mode as claimed in claim 2, **characterized in that**, said user interface module is also used for logining into said access server based on a user instruction, and acquiring said application service parameter table and said application service provider parameter table from said access server.

4. The security information interaction system based on the thin terminal mode as claimed in claim 3, **characterized in that**, each record in said application service parameter table is composed of an application service identifier field, an application service name field and an application service description field, wherein said application service name field is used for storing the name of the application service corresponding to the record, said application service identifier field is used for storing the unique application service identifier of the application service, and said application service description field is used for storing the description about the application service.

5. The security information interaction system based on the thin terminal mode as claimed in claim 4, **characterized in that**, each record in said application service provider parameter table is composed of an application service provider identifier field and an application service provider name field, wherein said application service provider name field is used for storing the name of the application service provider corresponding to the record, and said application service provider identifier field is used for storing the unique application service provider identifier of the application service provider.

6. The security information interaction system based on the thin terminal mode as claimed in claim 5, **characterized in that**, based on reading the contents in said application service description field of each record shown in said application service parameter table, user selects the application service corresponding to the record by means of choosing the name of the application service in the name field of one of the records.

7. The security information interaction system based on the thin terminal mode as claimed in claim 6, **characterized in that**, user selects the application service provider corresponding to the record by means of choosing the name of the application service provider in the name field of one record in said application service provider parameter table.

8. The security information interaction system based on the thin terminal mode as claimed in claim 7, **characterized in that**, said application service parameter is the application service identifier of the application service selected by the user.

9. The security information interaction system based on the thin terminal mode as claimed in claim 8, **characterized in that**, said application service provider parameter is the application service provider identifier of the application service provider selected by the user.

10. The security information interaction system based on the thin terminal mode as claimed in claim 9, **characterized in that**, said access server further comprises:
a main controller for receiving and analyzing said security information interaction request from said security information interaction terminal, constructing a query instruction based on the analyzed application service parameter and the application service provider parameter, and transferring said query instruction to an application service query module, and also for executing the subsequent processing based on the query result transferred back from said application service query module;
an application service query module for querying an application service information table based on the application service parameter and the application service provider parameter in said query instruction, and transferring the query result back to said main controller;
an information table storage module for storing said application service information table;
an parameter table storage module for storing said application service parameter table and said application service provider parameter table, and updating said application service parameter table and said application service provider parameter table based on the received parameter table configuration instruction; and
a configuration module for receiving an information table configuration instruction and/or the parameter table configuration instruction from the user, and updating said application service information table, and/or said application service parameter table, and/or said application service provider parameter table based on said information table configuration instructions, and/or said parameter table configuration instruction.

11. The security information interaction system based on the thin terminal mode as claimed in claim 10, **characterized in that**, said parameter table storage module is also used for controlling the display attributes of each record in said application service parameter table and said application service provider parameter table based on the received parameter table configuration instruction.

12. The security information interaction system based on the thin terminal mode as claimed in claim 11, **characterized in that**, said main controller is also used for providing said application service parameter table and said application service provider parameter table to said user interface module based on said login of said user interface module.

13. The security information interaction system based on the thin terminal mode as claimed in claim 12, **characterized in that**, each record in said application service information table is composed of the application service identifier field, the application service provider identifier field and an application server address information field, wherein said application service identifier field is used for storing the unique application service identifier of the application service corresponding to the record, said application service provider identifier field is used for storing the unique application service provider identifier of the application service provider providing the application service, and said application server address information field is used for storing the address information of the application server providing the application service.

14. The security information interaction system based on the thin terminal mode as claimed in claim 13, **characterized in that**, the same application service has the same application service identifier both in said application service parameter table and said application service information table, and the same application service provider has the same application service provider identifier both in said application service provider parameter table and said application service information table, and the application service identifier of any record in said application service information table has to exist in said application service parameter table, whereas the application service provider identifier of any record in said application service information table has to exist in said application service provider parameter table.

15. The security information interaction system based on the thin terminal mode as claimed in claim 14, **characterized in that**, when the record matching with both said application service parameter and said application service provider parameter is found out from said application service information table, the query result returned back to said main controller by said application service query module indicates "matching operation is successful", and said query result includes the address information of the application server in the matched record.

16. The security information interaction system based on the thin terminal mode as claimed in claim 15, **characterized in that**, when the record matching with both said application service parameter and said application service provider parameter is found out from said application service information table, the query result returned back to said main controller by said application service query module indicates "matching operation is successful", and said query result includes the address information of the application server in the matched record.

17. The security information interaction system based on the thin terminal mode as claimed in claim 16, **characterized in that**, when only the record which matches with said application service parameter but does not match with said application service provider parameter is found out from said application service information table, the query result returned back to said main controller by said application service query module indicates "matching operation is not successful", and said query result includes the application service provider identifier in the record which matches with said application service parameter but does not match with said application service provider parameter.

18. The security information interaction system based on the thin terminal mode as claimed in claim 17, **characterized in that**, said main controller is further used for sending the application service request constructed according to said security information interaction request to the application server directed by the address information of the application server in the matched record when the received query result indicates "matching operation is successful".

19. The security information interaction system based on the thin terminal mode as claimed in claim 18, **characterized in that**, said main controller is further used for constructing said security information interaction request response based on the application service address in the application service request response from the application server directed by said address information, and transferring said security information interaction request response back to said user interface module, wherein said security information interaction request response including said application service address and a flag indicating "bridging".

20. The security information interaction system based on the thin terminal mode as claimed in claim 19, **characterized in that**, said main controller is further used for constructing said security information interaction request response based on said query result when the received query result indicates "matching operation is not successful", and transferring said security information interaction request response back to said user interface module, wherein said security information interaction request response including the application service provider identifier in the record which matches with said application service parameter but does not match with said application service provider parameter.

21. The security information interaction system based on the thin terminal mode as claimed in claim 20, **characterized in that**, said user interface module is also used for receiving and analyzing said security information interaction request response, establishing the communication link with the application server providing said target application service based on the application service address included in said security information interaction request response when said security information interaction request response includes the flag indicating "bridging", and completing the subsequent security information interaction procedure based on said communication link.

22. The security information interaction system based on the thin terminal mode as claimed in claim 21, **characterized in that**, said user interface module is also used for displaying the name of the application service provider corresponding to said application service provider identifier based on said application service provider identifier included in said security information interaction request response when the received security information interaction request response does not include the flag indicating "bridging", and asking the user whether to select other application service providers and then restarting or ending the security information interaction procedure based on the selection of the user.

23. The security information interaction system based on the thin terminal mode as claimed in claim 22, **characterized in that**, said configuration module is also used for transferring the parameter table configuration instruction from the user to said parameter table storage module.

24. The security information interaction system based on the thin terminal mode as claimed in claim 23, **characterized in that**, said security information interaction terminal is a mobile terminal.

25. The security information interaction system based on the thin terminal mode as claimed in claim 24, **characterized in that**, said user interface module is a web browser.

26. The security information interaction system based on the thin terminal mode as claimed in claim 25, **characterized in that**, both the address information of the application server and the application service address are the address of web sites.

27. The security information interaction system based on the thin terminal mode as claimed in claim 26, **characterized in that**, said security information interaction procedure is a mobile payment procedure.

28. The security information interaction system based on the thin terminal mode as claimed in claim 27, **characterized in that**, an SSL encryption transmission channel is established between said security information interaction terminal and said access server, and the information interaction between said security information interaction terminal and said access server is performed using said SSL encryption transmission channel.

29. The security information interaction system based on the thin terminal mode as claimed in claim 28, **characterized in that**, a bidirectional authentication mechanism in the PKI certificate authentication system is employed between said security information interaction terminal and said access server.

30. The security information interaction system based on the thin terminal mode as claimed in claim 29, **characterized in that**, each of said at least one application server further comprises:
a request processing module for constructing said application service request response based on the received application service request, and transferring said application service request response to said access server, wherein said application service request response including the application service address associated with said target application service; and
an application service executing module for completing the subsequent security information interaction procedure based on said communication link with said security information interaction terminal established subsequently.

31. A security information interaction terminal, said security information interaction terminal being used for receiving a security information interaction request from a user, and transferring said security information interaction request to the corresponding access server, and also for establishing a communication link with the application server providing the target application service based on a security information interaction request response transferred back from said access server, and completing the subsequent security information interaction procedure based on said communication link, wherein said security information interaction request including the information indicating the target application service.

32. An access server, said access server being used for querying the address information of the application server providing the target application service based on the security information interaction request received from the corresponding security information interaction terminal, and sending an application service request constructed according to said security information interaction request to the application server providing said target application service based on the queried address information, and also for constructing a security information interaction request response based on the application service address in the application service request response from said application server providing said target application service, and transferring said security information interaction request response back to said security information interaction terminal.

33. An application server, said application server being used for constructing an application service request response based on the application service request received from an access server, transferring said application service request response to said access server, and completing the subsequent security information interaction procedure based on a communication link with the corresponding security information interaction terminal established subsequently, wherein said application service request response including the application service address associated with a target application service.

34. A security information interaction method based on the thin terminal mode, said security information interaction method based on the thin terminal mode comprising the following steps:
(A1) a security information interaction terminal receiving a security information interaction request from a user, and transferring said security information interaction request to an access server, wherein said security information interaction request including the information indicating a target application service;
(A2) said access server querying the address information of the application server providing said target application service based on the received security information interaction request, and sending an application service request constructed according to said security information interaction request to the application server providing said target application service based on the queried address information;
(A3) said application server providing said target application service constructing an application service request response based on the received application service request, and transferring said application service request response to said access server, wherein said application service request response including the application service address associated with said target application service;
(A4) said access server constructing a security information interaction request response based on the application service address in the application service request response from said application server providing said target application service, and transferring said security information interaction request response back to said security information interaction terminal; and
(A5) said security information interaction terminal establishing a communication link with said application server providing said target application service based on said security information interaction request response transferred back from said access server, and completing the subsequent security information interaction procedure based on said communication link.
